# DEMANDE DE BREVET EUROPEEN

(11) **EP 0 615 878 A1**
(43) Date de publication de la demande: **21.09.1994**
(21) Numéro de dépôt: 94400592.5
(22) Date de dépôt: 18.03.1994
(51) Int. Cl.: B60K 41/02, G05G 1/14, B60K 26/02

(54) **Dispositif de sécurité pour embrayage piloté**

(30) Priorité: 19.03.1993 FR 9303186
(71) Demandeur: REGIE NATIONALE DES USINES RENAULT S.A., F-92109 Boulogne Billancourt (FR)
(72) Inventeur: Chamaillard, Jean-Claude, F-94230 Cachan (FR)

(57) **Abrégé**

Dispositif de sécurité pour embrayage piloté en réponse au déplacement de la pédale (1) et du câble d'accélérateur (3) d'un véhicule automobile, caractérisé en ce qu'il comporte un premier élément (10) de commande de l'embrayage relié à la pédale d'accélérateur (1), et un second élément (12, 15) de commande de l'embrayage relié au câble d'accélérateur (3) de façon à maintenir le premier élément (10) en position de débrayage, lorsque la pédale (1) est au repos.

## Description

La présente invention concerne un dispositif de sécurité pour embrayage piloté. Elle s'applique notamment à un véhicule automobile ne comportant pas de pédale d'embrayage, mais équipé d'une boîte de vitesses mécanique à commande manuelle.

Par la publication FR 2 432 399, on connaît un dispositif de manoeuvre automatique d'un embrayage de véhicule, sur lequel le passage des vitesses s'effectue à l'aide d'un levier commandé à la main. Ce dispositif, disposé entre le moteur et la boîte de vitesses, comporte un servomoteur actionné par une force auxiliaire. Un système de commande déclenche la force auxiliaire d'actionnement du servomoteur en fonction de la position de la pédale d'accélération et/ou des vitesses mesurées en amont et en aval de l'embrayage. Le dispositif de manoeuvre automatique décrit dans ce document, fonctionne aussi bien au démarrage que lors des passages de vitesses.

Les véhicules équipés d'un embrayage piloté tel que celui-ci, ont la particularité d'être dépourvus de "couple de traînée" entraînant le déplacement du véhicule lorsque le moteur est au ralenti avec une vitesse engagée. Toutefois, ils présentent une lacune importante en matière de sécurité. En effet, à l'occasion d'une intervention sous le capot, par exemple sur le boîtier du papillon des gaz, lorsque le moteur est au ralenti et une vitesse engagée, toute traction sur le câble d'accélérateur a pour conséquence de faire "tomber" la pédale d'accélérateur. En l'absence de disposition particulière, le dispositif de commande de l'embrayage exploite l'information correspondante pour déclencher l'embrayage, et la traction opérée sur le câble d'accélérateur se traduit par la mise en déplacement du véhicule, risquant de renverser l'utilisateur. La prévention de tels accidents se limite aujourd'hui à la présence d'une étiquette de mise en garde à proximité du boîtier papillon, et à un avertissement dans la notice d'utilisation du véhicule.

Pour garantir de façon effective la sécurité des usagers intervenant sur boîtier papillon d'un véhicule, la présente invention propose d'adapter sur celui-ci un dispositif mécanique empêchant sa mise en déplacement involontaire.

Elle concerne un dispositif de sécurité pour embrayage piloté en réponse au déplacement de la pédale et du câble d'accélérateur d'un véhicule automobile. Ce dispositif est caractérisé en ce qu'il comporte un premier élément de commande de l'embrayage relié à la pédale d'accélérateur, et un second élément de commande de l'embrayage relié au câble d'accélérateur, de façon à maintenir le premier élément en position de débrayage, lorsque la pédale est au repos.

Selon un mode de réalisation de l'invention, le premier élément est une bielle de commande d'un potentiomètre de commande de l'embrayage, articulé sur la pédale d'accélérateur.

Selon un mode de réalisation de l'invention, la pédale et le câble sont rappelés en position de débrayage et de ralenti du moteur par un ressort de rappel.

Selon un mode de réalisation de l'invention, le second élément de commande est constitué par un basculeur, articulé d'une part sur l'extrémité du câble, et d'autre part sur une pièce solidaire de la pédale, de façon à exercer une traction sur le câble en réponse au déplacement de la pédale vers le bas et à désolidariser le câble et la pédale, lorsqu'une traction est exercée sur le câble, indépendamment de la pédale.

Selon un mode de réalisation de l'invention, le basculeur est articulé sur une chape, en appui contre une butée fixe, dans la position de repos de la pédale.

Selon un mode de réalisation de l'invention, le basculeur pivote autour d'un axe porté par la chape, et repose contre celle-ci par l'intermédiaire d'un boîtier élastique.

Selon un mode de réalisation de l'invention, le second élément de commande est constitué par un embout d'extrémité du câble, relié à une pièce solidaire de la pédale, de façon à exercer une traction sur le câble en réponse au déplacement de la pédale vers le bas, et à désolidariser le câble de la pédale, lorsqu'une traction est exercée sur le câble indépendamment de la pédale.

Selon un mode de réalisation de l'invention, l'embout repose contre une bague solidaire de la pédale, et celle-ci est en appui contre une butée fixe, dans sa position de repos.

Selon un mode de réalisation de l'invention, l'embout repose contre la bague par l'intermédiaire d'une cale en caoutchouc fixée sur celle-ci.

L'invention sera mieux comprise à la lecture de la description suivante de deux modes de réalisation particuliers de l'invention, en liaison avec les dessins annexés, sur lesquels :
- les figures 1 A, 1 B et 1 C se rapportent au premier mode de réalisation de l'invention, et
- les figures 2 A, 2 B, et 2 C se rapportent au second mode de réalisation de l'invention.

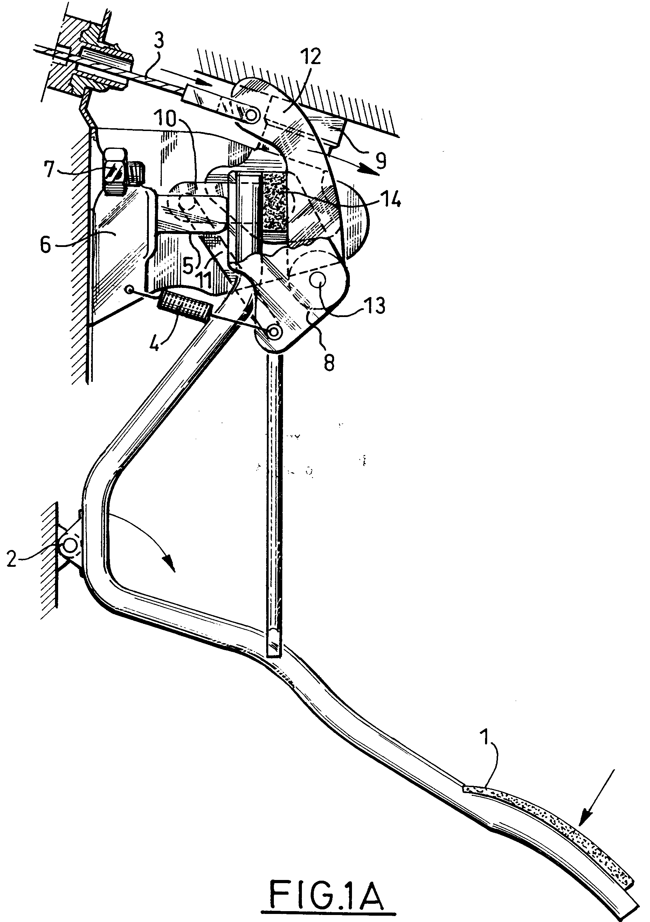

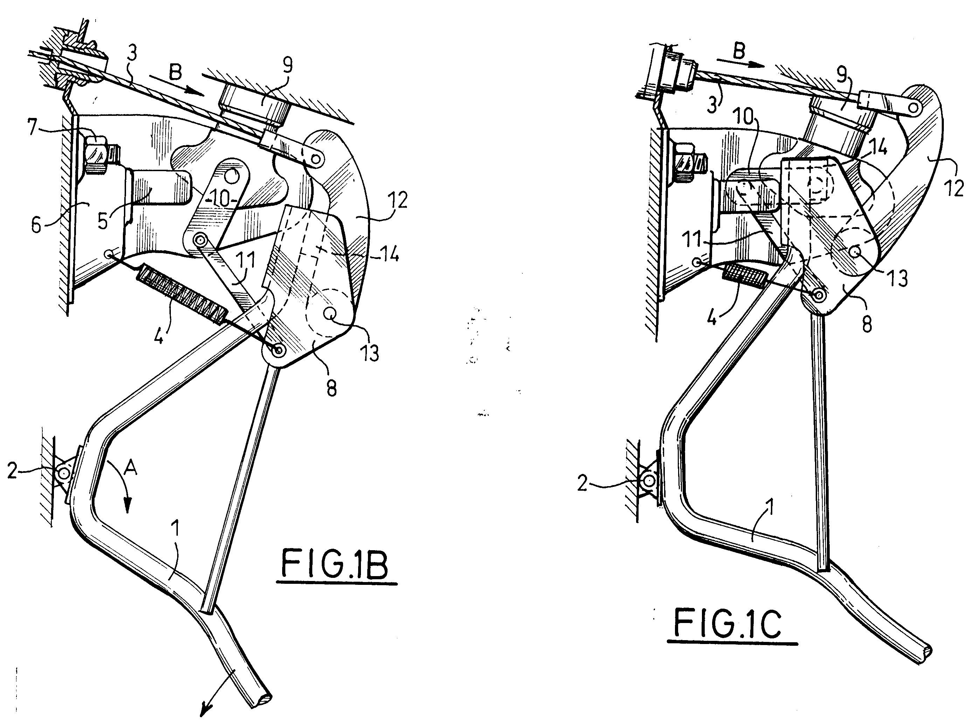

Sur les figures 1 A, 1 B, et 1 C, on reconnaît une pédale d'accélérateur 1 pouvant pivoter autour d'un point fixe 2 du véhicule sous la pression de l'utilisateur (figure 1 B). La figure 1 A représente la pédale au repos, la figure 1 B représente cette même pédale lorsque l'utilisateur exerce une pression sur celle-ci, et la figure 1 C met en évidence le fonctionnement du dispositif de sécurité de l'invention, lorsqu'une traction est exercée sur le câble d'accélérateur 3 au niveau du boîtier papillon (non représenté), sans action de l'utilisateur sur la pédale 1.

Un ressort 4 rappelle en permanence la pédale 1 vers sa position de repos c'est-à-dire en direction d'une butée haute 5, pour éviter qu'elle ne pivote autour du point fixe 2 sous l'effet de son propre poids. Le ressort 4 est normalement faiblement taré de façon à réduire l'effort de l'utilisateur sur la pédale 1, tandis que la butée haute 5, rapportée sur une console 6, elle-même fixée au moyen de vis 7 sur une partie fixe du véhicule, reçoit en appui au repos une chape 8, solidaire de la pédale 1. La butée haute 5 permet notamment d'établir de façon précise et définitive la position initiale, ou position de repos "pied levé", de la pédale 1.

Le dispositif de pilotage de l'embrayage (non représenté) est commandé par un potentiomètre 9, monté sur une partie fixe du véhicule, et actionné par l'intermédiaire d'une bielle 10 et d'une biellette 11 articulées sur la chape 8. Le câble d'accélérateur 3 est relié de façon articulée à la pédale 1, par l'intermédiaire d'un basculeur 12 pivotant sur la chape 8 autour de l'axe 13 porté par celle-ci. Une butée en caoutchouc 14 fixée sur le corps de la pédale 1 dans l'exemple représenté, mais pouvant également être montée sur le basculeur 12 plutôt que sur la pédale 1, assure l'appui élastique (réalisé sur les figures 1A et 1 B), du basculeur 12 contre la chape 8. La butée élastique 14 ou butée "anti-bruit" assure en outre l'application d'une pression constante par le basculeur 12 sur la chape 8, et limite la course morte de la pédale 1.

Le fonctionnement de ce dispositif est le suivant. En position de repos "pied levé" (figure 1 A), le ressort 4 assure l'appui du basculeur 12 contre la chape 8 et le maintien de la bielle 10 du potentiomètre dans une position horizontale interdisant la fermeture de l'embrayage. L'embrayage est donc ouvert, et le moteur tourne au ralenti. Lorsque l'utilisateur exerce une pression sur la pédale 1, (cf figure 1 B), celle-ci pivote dans le sens de la flèche A autour de l'axe 2. La chape 8 bascule vers la droite, entraînant dans un mouvement de rotation le basculeur 12, qui exerce une traction dans le sens de la flèche B sur le câble 3. Par ailleurs, la chape 8 entraîne dans son mouvement la biellette 11 et la bielle 10. Cette dernière quitte ainsi sa position horizontale de repos correspondant au débrayage. De façon classique, l'enfoncement de la pédale d'accélérateur 1 par l'utilisateur, entraîne donc le démarrage du véhicule.

En revanche, la situation illustrée par la figure 1 C correspond à une traction du câble 3 dans le sens de la flèche B exercée sur celui-ci au niveau du boîtier papillon, sans déplacement de la pédale d'accélérateur 1. Cette traction se traduit par un basculement vers la droite du basculeur 12 autour de son axe 13, sans déplacement de la chape 8. La bielle 10 du potentiomètre 9 ne bouge pas, et par conséquent le véhicule n'embraye pas.

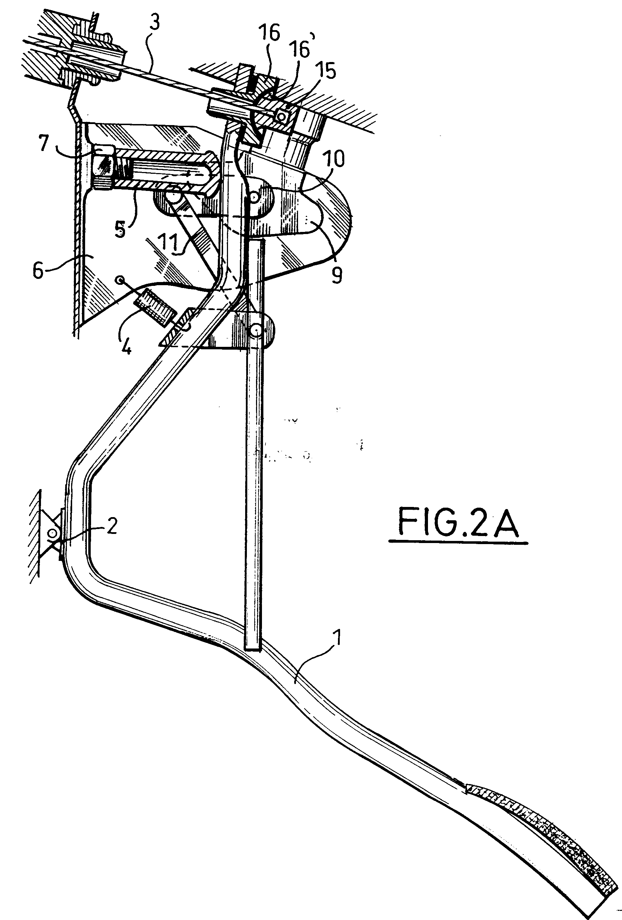

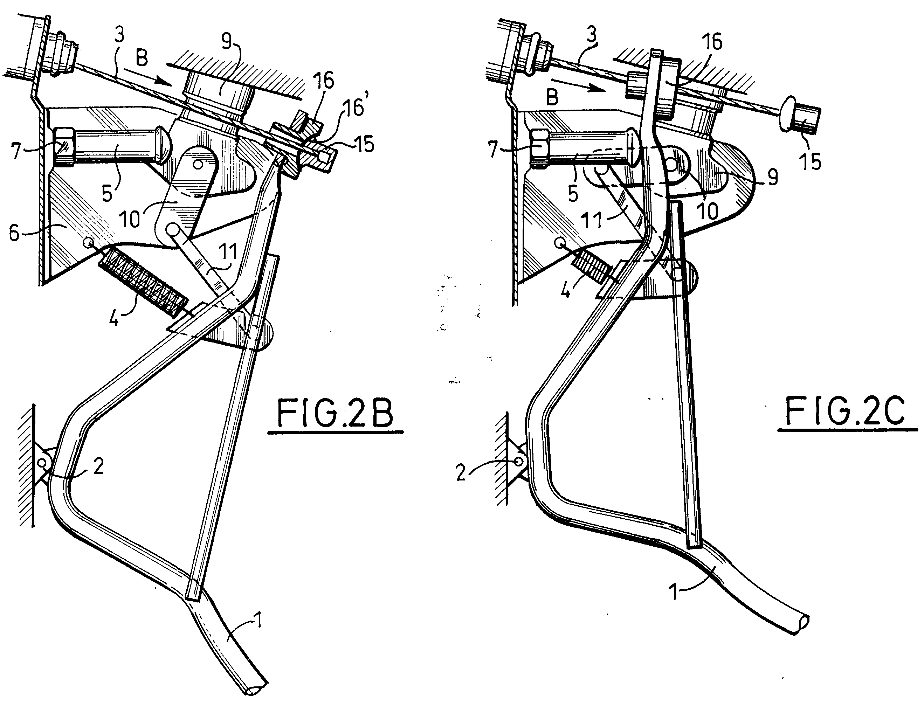

Les figures 2A, 2 B et 2C illustrent un autre mode de réalisation, selon lequel le câble 3 est relié à la pédale 1 par un embout de câble 15 surmoulé sur celui-ci. Une bague concave 16', pouvant être pourvue d'un embout en caoutchouc collé 16, sera par exemple clipsée sur la pédale 1. La bague 16 reçoit en appui (figures 1B et 1C) l'embout 15, lorsque la pédale 1 exerce, comme dans l'exemple précédent, un effort de rappel sur l'extrémité du câble 3. La cale 16' assure l'application d'une pression constante par l'embout 15 sur la pédale 1, et limite la course morte de celle-ci, tout en exerçant une fonction d'amortissement des vibrations. En revanche, la zone de l'embout 15 en frottement contre la cale 16' sera de préférence métallique, en vue d'éviter les "grincements" pouvant résulter du travail en force de deux pièces en matière plastique l'une sur l'autre.

Le fonctionnement de ce second mode de réalisation de l'invention est comparable à celui du précédent. La figure 2A correspond à la position de repos, "pied levé", du dispositif. Dans cette position, l'appui de la pédale 1 contre la butée haute 5, sous l'action du ressort de rappel 4 maintient la bielle 10 du potentiomètre 9 horizontale, de façon à inhiber l'embrayage. Lorsque l'utilisateur appuie sur l'extrémité inférieure de la pédale 1, celle-ci pivote dans le sens de la flèche A autour du point fixe 2 ; le câble est tiré dans le sens de la flèche B et la bielle 10 bascule vers le bas, donc le véhicule démarre. En revanche dans la situation illustrée par la figure 2 C, l'utilisateur exerce une traction sur le câble dans le sens de la flèche B, sans appuyer sur la pédale 1 ; l'embout 15 se décolle de la bague 16, sans que la pédale 1 et la bielle 10 du potentiomètre 9 ne se déplacent, donc le véhicule ne démarrera pas.

En conclusion l'invention propose un dispositif de sécurité mettant l'utilisateur à l'abri du démarrage intempestif du véhicule notamment lors de la manipulation du boîtier papillon. Ce dispositif, strictement mécanique est simple à mettre en oeuvre, et adaptable à peu de frais, sur la plupart des véhicules à embrayage piloté.

## Revendications

**[1]** Dispositif de sécurité pour embrayage piloté en réponse au déplacement de la pédale (1) et du câble d'accélérateur (3) d'un véhicule automobile, caractérisé en ce qu'il comporte un premier élément (10) de commande de l'embrayage relié à la pédale d'accélérateur (1), et un second élément (12, 15) de commande de l'embrayage relié au câble d'accélérateur (3) de façon à maintenir le premier élément (10) en position de débrayage, lorsque la pédale (1) est au repos.

**[2]** Dispositif de sécurité selon la revendication 1, caractérisé en ce que le premier élément est une bielle de de commande (10) d'un potentiomètre (9) de commande de l'embrayage, articulé sur la pédale d'accélérateur (1).

**[3]** Dispositif de sécurité selon les revendications 1 ou 2, caractérisé en ce que la pédale (1) et le câble (3) sont rappelés en position de débrayage et de ralenti du moteur, par un ressort de rappel (4).

**[4]** Dispositif de sécurité selon les revendications 1, 2 ou 3, caractérisé en ce que le second élément de commande est constitué par un basculeur (12), articulé d'une part sur l'extrémité du câble (3), et d'autre part sur une pièce (8) solidaire de la pédale (1), de façon à exercer une traction sur le câble (3) en réponse au déplacement de la pédale vers le bas et à désolidariser le câble (3) et la pédale (1), lorsqu'une traction est exercée sur le câble (3), indépendamment de la pédale (1).

**[5]** Dispositif de sécurité selon la revendication 4, caractérisé en ce que le basculeur (12) est articulé sur une chape (8), en appui contre une butée fixe (5), dans la position de repos de la pédale (1).

**[6]** Dispositif de sécurité selon la revendication 5, caractérisé en ce que le basculeur (12) pivote autour d'un axe (13) porté par la chape (8), et repose contre celle-ci, par l'intermédiaire d'une butée élastique (14).

**[7]** Dispositif de sécurité selon les revendications 1, 2 ou 3, caractérisé en ce que le second élément de commande est constitué par un embout d'extrémité (15) du câble (3), relié à une pièce (16) solidaire de la pédale (1), de façon à exercer une traction sur le câble (3) en réponse au déplacement de la pédale vers le bas, et à désolidariser le câble (3) de la pédale (1) lorsqu'une traction est exercée sur le câble (3) indépendamment de la pédale (1).

**[8]** Dispositif de sécurité selon la revendication 7, caractérisé en ce que l'embout (15) repose contre une bague (16) solidaire de la pédale (1), et en ce que celle-ci est en appui contre une butée fixe (5) dans sa position de repos.

**[9]** Dispositif de sécurité selon la revendication 8, caractérisé en ce que l'embout (15) repose contre la bague (16) par l'intermédiaire d'une cale en caoutchouc (16') sur celle-ci.
